Europäisches Patentamt

European Patent Office

Office européen des brevets

(11) Veröffentlichungsnummer: **0 428 821 A1**

# (12) EUROPÄISCHE PATENTANMELDUNG

(21) Anmeldenummer: 90105290.2

(22) Anmeldetag: 21.03.90

(51) Int. Cl.⁵: **B01D 37/00**, B01D 24/00, B01D 35/24, B01D 24/12

(30) Priorität: 21.11.89 DE 3938607

(43) Veröffentlichungstag der Anmeldung:
29.05.91 Patentblatt 91/22

(84) Benannte Vertragsstaaten:
AT BE CH DE DK ES FR GB IT LI LU NL SE

(71) Anmelder: **DIDIER-WERKE AG**
**Lessingstrasse 16-18**
**W-6200 Wiesbaden(DE)**

(72) Erfinder: **Weidner, Ullrich**
**Lessingstrasse 8**
**W-6719 Göllheim(DE)**
Erfinder: **Bönig, Guido**
**Robert-Stolz-Strasse 11**
**W-6730 Neustadt(DE)**
Erfinder: **Mang, Otto**
**Randsiedlung 7**
**W-6753 Enkenbach-Alsenborn(DE)**

(74) Vertreter: **Brückner, Raimund, Dipl.-Ing.**
**c/o Didier-Werke AG Lessingstrasse 16-18**
**W-6200 Wiesbaden(DE)**

(54) **Verfahren und Anlage zur Filtration von Suspensionen, Emulsionen und/oder Kühlschmierstoffen.**

(57) Es wird ein Verfahren bzw. eine Anlage zur Filtration von Suspensionen, Emulsionen und/oder Kühlschmierstoffen vorgeschlagen, die insbesondere eine gute Wertstoffrückgewinnung gewährleistet, sowie eine Entsorgung des Filterschlammes überflüssig macht.

EP 0 428 821 A1

# VERFAHREN UND ANLAGE ZUR FILTRATION VON SUSPENSIONEN, EMULSIONEN UND/ODER KÜHLSCH-MIERSTOFFEN

Die Erfindung betrifft ein Verfahren zur Filtration von Suspensionen, Emulsionen und/oder Kühlschmierstoffen, insbesondere in der Werkzeug-, Metall- und Maschinenbauindustrie.

Derartige Filterverfahren bzw. Filteranlagen sind bereits in dem Prospekt V 3.21 der Didier-Filtertechnik beschrieben. Suspensionen, deren Feststoffe die Öffnungen des Filtermittels innerhalb kurzer Zeit belegen oder verstopfen, können dennoch filtriert werden, wenn man das Blockieren des Filtermittels mit aufliegenden Filterhilfsmitteln, z.B. Kieselgur verhindert. Derartige Filterhilfsmittel übernehmen einerseits die Aufgabe, auf einem verhältnismäßig grobporigen Filtermittel eine für das Filtrat durchlässige Schicht zu bilden, andererseits die Feststoffe abzuscheiden. Der Nachteil der Filter, die stets Filterhilfsmittel benötigen, besteht in der aufwendigen Entsorgung des Filterkuchens bzw. -schlammes, insbesondere in der Entsorgung der im Filterkuchen enthaltenen Metallen. Als weitere Nachteile sind der Verbrauch an Filterhilfsmitteln sowie die Reinigung und Wartung der Filtermittel zu nennen. Außerdem können bei diesem Verfahren die wertvollen Metalle aus dem Filterschlamm nicht bzw. nur sehr aufwendig zurückgewonnen werden.

Die Aufgabe der vorliegenden Erfindung liegt somit darin, ein Filterverfahren bzw. eine Filteranlage vorzuschlagen, die alle o.g. Nachteile vermeidet, und die insbesondere eine gute Wertstoffrückgewinnung gewährleistet, sowie eine Entsorgen des Filterschlammes überflüssig macht.

Erfindungsgemäß wird diese Aufgabe dadurch gelöst, daß die abzuscheidenden Stoffe ausschließlich und direkt durch das Filtermittel bzw. Filtermaterial zurückgehalten werden.

Durch dieses spezielle Verfahren werden Filterhilfsmittel, wie z.B. Kieselgur, überflüssig, die die Entsorgung des Filterkuchens bzw. Filterschlammes aufwendig machen. Wertvolle Bestandteile, wie z.B. Metalle, können aus dem Filterschlamm problemlos zurückgewonnen werden. Vorzugsweise behält das Filtermittel bzw. das Filtermaterial während der gesamten Lebensdauer des Filters seine Beständigkeit, Haltbarkeit, sein Volumen und seinen Abscheidegrad.

Ein wesentlicher Vorteil gegenüber dem Stand der Technik ist bei diesem Verfahren, daß das Filtermaterial sich während Filtration bzw. Reinigung sich weder mechanisch noch chemisch verändert. Der Wirkungsgrad der Filtration bleibt erhalten. Die Menge des Filtermaterials nimmt nicht ab, so daß ein Nachfüllen bzw. Erneuern des Filtermaterials nicht notwendig wird.

Bevorzugt geschieht die Filtration unter Druck.

Gemäß einer besonders bevorzugten Verfahrensweise geschieht die Reinigung der Filtermittel bzw. des Filtermaterials durch Rückspülung mittels Filtrat, wobei die Rückspülung in und/oder entgegengesetzt zur Strömungsrichtung der Filtration erfolgt.

Weiterhin ist die Rückspülgeschwindigkeit des Filtrats wesentlich höher als die Filtrationsgeschwindigkeit.

Die Rückspülung kann mittels Luft und/oder Wasser erfolgen.

Ebenso ist es möglich, daß die Rückspülung in mindestens zwei Schritten erfolgt, wobei die erste Rückspülung entgegengesetzt zur Filtrationsrichtung und die zweite Rückspülung in Filtrationsrichtung erfolgt.

Der Filtrations- bzw. Rückspülablauf wird mittels programmierbaren Mikroprozessoren gesteuert.

Die Merkmale der Filtrationsanlage ergeben sich aus den Unteransprüchen.

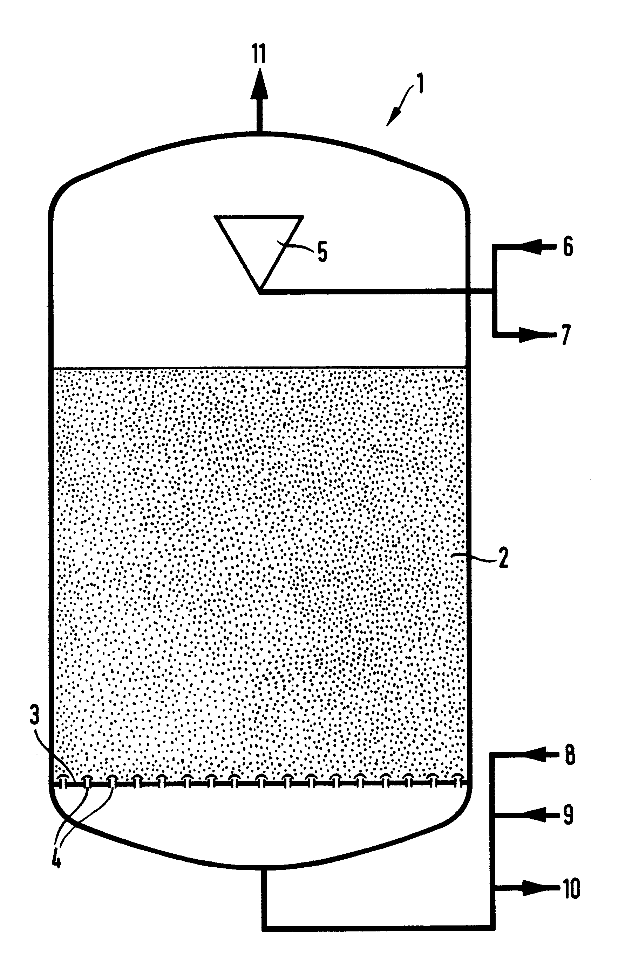

Ein Ausführungsbeispiel der Filteranlage ist in der Zeichnung dargestellt.

Die Figur zeigt schematisch den Aufbau eines Filters mit den zu- bzw. wegführenden Leitungen.

Der Filter 1 enthält ein mit Düsen 4 versehenen Düsenboden 3, der das Filtermaterial 2 trägt. Ferner ist im oberen Bereich des Filters der Verteilertrichter 5 angeordnet.

Die Filtration geschieht in der Weise, daß die Trübe/Suspension durch die Leitung 6 über den Verteilertrichter 5 auf das Filtermaterial 2 geleitet wird. Nach Durchlauf der Trübe durch das Filtermaterial 2 und die Düse 4 im Düsenboden 3 gelangt das Filtrat durch die Leitung 10 in beispielsweise ein Reinwasserbecken.

Die Rückspülung erfolgt beispielsweise zunächst dadurch, daß das Filtrat über die Leitung 9 durch die Düse 4 im Düsenboden 3 in das Filtermaterial 2 und dann über die Leitung 7 in ein Schlammwasserbecken geleitet wird. Dann erfolgt die Reinigung des Filtermaterials in einem zweiten Schritt, indem das Filtrat durch die Leitung 7 durch das Filtermaterial 2 geführt wird.

Ebenso ist es möglich, je nach Anwendungsfall, daß die Rückspülung mittels Luft über die Leitung 8 bzw. mittels wasser über die Leitung 9 erfolgt.

Entlüftet wird der Filter über die Leitung 11. Vorzugsweise kann die Entlüftung intervallmäßig erfolgen.

Die zur Steuerung bzw. Regelung der Anlage erforderlichen steuereinrichtungen bzw. Ventile und Pumpen sind in der zeichnung nicht dargestellt.

Die wesentlichen Vorteile der Erfindung liegen darin, daß bei diesem Verfahren keine Filterhilfsmittel erforderlich sind. Der Verbrauch an Filterhilfsmitteln entfällt somit. Die aufwendige Reinigung und Wartung der Filtermittel bzw. des Filtermaterials ist nicht mehr notwendig. Das Filtermaterial behält seine Filtereigenschaften und verbraucht sich nicht bei der Filtration bzw. Reinigung. Als wesentlicher Vorteil ist die problemlose Rückgewinnung der wertvollen Metalle zu nennen.

**Ansprüche**

1. Verfahren zur Filtration von Suspensionen, Emulsionen und/oder Kühlschmierstoffen, insbesondere in der Werkzeug-, Metall- und Maschinenbauindustrie,
dadurch gekennzeichnet,
daß die abzuscheidenden Stoffe ausschließlich und direkt durch das Filtermittel bzw. Filtermaterial zurückgehalten werden.

2. Verfahren zur Filtration nach Anspruch 1,
dadurch gekennzeichnet,
daß das Filtermittel bzw. das Filtermaterial während der gesamten Lebensdauer des Filters seine Beständigkeit, Haltbarkeit, Volumen und sein Abscheidegrad beibehält.

3. Verfahren zur Filtration nach Anspruch 1 oder 2,
dadurch gekennzeichnet,
daß die Filtration unter Druck erfolgt.

4. Verfahren zur Filtration nach Anspruch 1, 2 oder 3,
dadurch gekennzeichnet,
daß die Reinigung der Filtermittel bzw. des Filtermaterials durch Rückspülung mittels Filtrat erfolgt, wobei die Rückspülung in und/oder entgegengesetzt zur Strömungsrichtung der Filtration erfolgt.

5. Verfahren zur Filtration nach mindestens einem der vorhergehenden Ansprüche,
dadurch gekennzeichnet,
daß die Rückspülgeschwindigkeit des Filtrats wesentlich höher ist als die Filtrationsgeschwindigkeit.

6. Verfahren zur Filtration nach mindestens einem der vorhergehenden Ansprüche,
dadurch gekennzeichnet,
daß die Rückspülung mittels Luft und/oder Wasser erfolgt.

7. Verfahren zur Filtration nach mindestens einem der vorhergehenden Ansprüche,
dadurch gekennzeichnet,
daß die Rückspülung in mindestens zwei Schritten erfolgt, wobei die erste Rückspülung entgegengesetzt zur Filtrationsrichtung und die zweite Rückspülung in Filtrationsrichtung erfolgt.

8. Verfahren zur Filtration nach einem der vorhergehenden Ansprüche,
dadurch gekennzeichnet,

daß der Filtrations- bzw. Rückspülablauf mittels programmierbaren Mikroprozessoren steuerbar ist.

9. Anlage zur Durchführung des Verfahrens nach einem der vorhergehenden Ansprüche,
dadurch gekennzeichnet,
daß im Filter ein das Filtermittel bzw. Filtermaterial tragender Düsenboden angeordnet ist.

10. Anlage nach einem der vorhergehenden Ansprüche,
dadurch gekennzeichnet,
daß die Anzahl und die Anordnung der Düsen im Düsenboden optimiert sind, wobei die Düsen raster-, strahlen- und/oder sternförmig angeordnet sind.

11. Anlage nach einem der vorhergehenden Ansprüche,
dadurch gekennzeichnet,
daß zwei oder mehr verschiedene Düsentypen im Düsenboden vorgesehen sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| X | <u>CH - A - 527 632</u> (ECODYNE) * Ansprüche * -- | 1,2,4, 6 | B 01 D 37/00 B 01 D 24/00 B 01 D 35/24 B 01 D 24/12 |
| X | <u>EP - A1 - 0 019 656</u> (SULZER) * Ansprüche * -- | 1,4,6, 9,11 | |
| X | <u>DE - A - 2 104 048</u> (WASAGCHEMIE) * Ansprüche; Seiten 1,2 * -- | 1-3 | |
| X | <u>GB - A - 1 293 894</u> (UNION TANK CAR) * Ansprüche * -- | 1,2,4, 6 | |
| X | <u>GB - A - 696 932</u> (KRETZSCHMAR) * Ansprüche * -- | 1,2,4, 9,10 | |
| A | ULLMANNS ENZYKLOPÄDIE DER TECHNISCHEN CHEMIE, 4. Auflage, Band 2, 1972, Weinheim Ch. ALT "Flitration" Seiten 154-173 ---- | | |

| RECHERCHIERTE SACHGEBIETE (Int. Cl.⁵) |
|---|
| B 01 D |

Der vorliegende Recherchenbericht wurde für alle Patentansprüche erstellt.

| Recherchenort | Abschlußdatum der Recherche | Prüfer |
|---|---|---|
| WIEN | 19-12-1990 | BECKER |